# EUROPÄISCHE PATENTSCHRIFT

(11) **EP 0 791 502 B1**
(45) Veröffentlichungstag und Bekanntmachung des Hinweises auf die Patenterteilung: **24.10.2001**
(21) Anmeldenummer: 97102637.2
(22) Anmeldetag: 19.02.1997
(51) Int. Cl.: B60Q 1/26, F21S 8/10, H01R 33/46

(54) **Heckleuchte für Fahrzeuge**
Vehicle tail-light
Feu arrière pour véhicule

(30) Priorität: 24.02.1996 DE 29603432 U
(43) Veröffentlichungstag der Anmeldung: 27.08.1997
(73) Patentinhaber: Hella KG Hueck & Co., 59552 Lippstadt (DE)
(72) Erfinder: Aue, Ferdinand, 33175 Bad Lippspringe (DE); Pohl, Reiner, 59558 Lippstadt (DE)

(56) Entgegenhaltungen:
- DE-A- 3 342 382
- DE-U- 7 215 851
- FR-A- 2 406 156
- US-A- 4 423 915

## Beschreibung

Die Erfindung betrifft eine Heckleuchte für Fahrzeuge, mit mindestens zwei Leuchtenkammern, in welche jeweils ein Lampenträger für eine erste bzw. zweite Lampe eingesetzt ist, welche mindestens eine quer zur Lichtaustrittsrichtung der jeweiligen Leuchtenkammer verlaufende Glühwendel und Längsachse aufweisen und bei der von der Mantelfläche eines Sockels zwei Haltenocken abstehen, welche bei beiden Lampen auf sich abgewandten Seiten des Sockels liegen, wobei bei der ersten Lampe durch beide Haltenocken eine senkrecht zur Glühwendel verlaufende Linie geht und bei der zweiten Lampe durch zumindest einen Haltenocken eine senkrecht zur Glühwendel verlaufende Linie geht und der andere Haltenocken zu der Linie beabstandet ist, und welche in eine erste bzw. zweite Einbuchtung des jeweiligen Lampenträgers eingreifen, welcher mit aus einer Öffnung herausgestellten Haltelappen an die Mantelfläche des Sockels angrenzt.

Aus dem deutschen Gebrauchsmuster U 72 15 851 ist eine Heckleuchte für Fahrzeuge mit einer einzigen Leuchtenkammer bekanntgeworden. In die Leuchtenkammer ist ein aus Blech bestehender plattenförmiger Lampenträger für eine erste Lampe eingesetzt. Der plattenförmige Lampenträger verläuft in seiner Hauptausdehnung in Lichtaustrittsrichtung und ist durch eine Halterung mit dem Leuchtengehäuse verbunden. Die Halterung weist sich zugewandte Führungsschlitze, in welche der Lampenträger eingeschoben ist, und Schrauben auf, welche den Lampenträger am Leuchtengehäuse halten. Die aus der Öffnung herausgestellten beiden Haltelappen, welche an die zylindrische Mantelfläche des Sockels der ersten Lampe angrenzen, weisen an ihrem freien Endabschnitt eine nach außen geöffnete erste Einbuchtung für einen Haltenocken der ersten Lampe auf. Die Öffnung des Lampenträgers umgibt den zylindrischen Sockel eng und weist an ihrem Rand zwei diametral zueinander liegende Aussparungen auf. Die Aussparungen dienen zum Hindurchführen der beiden Haltenocken der ersten Lampe. An einem Mittelpol der ersten Lampe liegt eine am Leuchtengehäuse gehalterte elektrische Kontaktfeder unter Vorspannung an und drückt die Haltenocken der ersten Lampe in die Einbuchtungen der Haltelappen hinein. Der Lampenträger kann auch so um 180 Grad gedreht an dem Leuchtengehäuse befestigt werden, daß die Haltelappen von der elektrischen Kontaktfeder wegweisen. Die Haltenocken der ersten Lampe greifen dann in Einbuchtungen ein, welche zwischen den Haltelappen in den Rand der Öffnung des Lampenträgers eingebracht sind. Somit kann die Lampe sowohl von der einen und anderen Seite in den Lampenträger eingesetzt werden als auch in zwei um 90 Grad gedrehten Stellungen an dem Lampenträger gehaltert werden. Da die Glühwendel der ersten Lampe in beiden Stellungen quer zur Lichtaustrittsrichtung verläuft ist der Lampenträger bei der einen Stellung quer zur Glühwendel und in der anderen Stellung in Richtung der Glühwendel in das Leuchtengehäuse eingesetzt.

Bei einer Heckleuchte für Fahrzeuge, welche aus dem deutschen Gebrauchsmuster U 73 21 153 bekannt ist, trägt ein Reflektor an seiner Rückseite einen aus Blech bestehenden Lampenträger, welcher mit Befestigungsfahnen selbstklemmend in Schlitze des Reflektors eingeschoben ist. Dabei graben sich widerhakenartige Klemmzähne in die Innenseite des jeweiligen Schlitzes ein. Die aus der Öffnung des Lampenträgers herausgestellten Haltelappen ragen in die Öffnung des Reflektors hinein und weisen zwischen ihren Endabschnitten jeweils eine Freimachung mit einer Einbuchtung auf. In die Einbuchtungen greifen die Haltenocken der ersten Lampe ein, welche von der Innenseite des Reflektors her in den Lampenträger eingesetzt sind.

Zudem ist eine in der Praxis verwendete Blinkleuchte für Fahrzeuge mit mehreren Leuchtenkammern bekanntgeworden, in welchen eine erste bzw. zweite Lampe in einen separaten Lampenträger eingesetzt ist. Die Lampenträger für die erste und zweite Lampe sind unterschiedlich gestaltet und weisen entweder die ersten Einbuchtungen für die beiden Haltenocken der ersten Lampe oder eine erste und zweite Einbuchtung für die zweite Lampe auf. Da für die erste und zweite Lampe jeweils ein anders gestalteter Lampenträger verwendet wird, ist für die Lampenträger nicht nur eine umfangreiche Lagerhaltung, sondern auch unterschiedliche Werkzeuge zur Herstellung der Lampenträger erforderlich.

Eine Heckleuchte mit den Merkmalen des Oberbegriffs von Anspruch 1 kann als aus der DE-A-33 42 382 bekannt gelten.

Aufgabe der Erfindung ist es, die im Oberbegriff des Anspruchs 1 beschriebene Heckleuchte für Fahrzeuge derart zu gestalten, daß durch eine einfache Gestaltung der Lampenträger ein weitestgehend einheitlicher Aufbau für die die erste und zweite Lampe aufnehmenden Leuchtenkammern möglich ist, um die Heckleuchte schnell und leicht montieren und kostengünstig herstellen zu können. Diese Aufgabe wird nach der Erfindung dadurch gelöst, daß die Lampenträger für die erste und zweite Lampe in ihrem Aufbau identisch sind und an dem freien und/oder im Bereich des an den Lampenträger angebundenen Endabschnitts der Haltelappen eine nach außen geöffnete erste Einbuchtung für die beiden Haltenocken der ersten Lampe aufweisen, wobei ein Haltenocken der zweiten Lampe in eine der ersten Einbuchtungen und der andere Haltenocken in eine zweite Einbuchtung eingreift, die ein Haltelappen zwischen seinen Endabschnitten aufweist. Hierbei ist sichergestellt, daß die Glühwendel der ersten und zweiten Lampe mit der Richtung ihrer Längsausdehnung zwischen den beiden Haltelappen hindurch verläuft. Deshalb können die Lampenträger in jede Leuchtenkammer bei gleicher Lage eingesetzt werden. Die zweite Lampe kann nicht in zwei Stellungen von einer Seite her in den Lampenträger eingesetzt werden, wenn nur in einen der beiden Haltelappen eine zweite Einbuchtung eingebracht ist. Weisen die Lampenträger in dem Bereich der an den Lampenträger angebundenen Endabschnitte und der freien Endabschnitte der Haltelappen jeweils eine Einbuchtung auf, so kann die erste Lampe von beiden Seiten des Lampenträgers her in die Öffnung eingesetzt werden. Zudem ist das Einsetzen der zweiten Lampe in die Öffnung von beiden Seiten des Lampenträgers her möglich, wenn die zweite Einbuchtung in dem Haltelappen des Lampenträgers entsprechend gestaltet ist.

In den Leuchtenkammern sind die Lampenträger in gleicher Art und Weise festsetzbar, wenn die Lampenträger in Halterungen der Leuchte eingesetzt sind, welche in ihrem Aufbau identisch ausgeführt sind. Dies ist besonders bei einer automatischen Fertigung von Vorteil. Die Heckleuchte kann sowohl für einen Anbau an der rechten als auch linken Seite des Fahrzeuges verwendet werden, wenn in mehreren Leuchtenkammern für die erste bzw. zweite Lampe in Anbaulage der Leuchte eine Halterung sowohl in der oberen als auch unteren Hälfte der Leuchtenkammern angeordnet ist. Bei der einen Heckleuchtenversion sind die Lampenträger in die untere Hälfte der Leuchtenkammern einzusetzen, während bei der anderen Heckleuchtenversion die Lampenträger in die obere Hälfte der Leuchtenkammern einzusetzen sind.

Bei einem aus Kunststoff hergestellten Leuchtengehäuse, welches durch eine Abschlußscheibe abgedeckt ist, müssen zur Herstellung der Halterungen für die Lampenträger keine zusätzlichen verstellbaren Werkzeugteile bestehen, wenn die Halterungen von an den Boden des Leuchtengehäuses angeformten Ansätzen gebildet sind, die an sich zugewandten Seiten jeweils einen in Lichtaustrittsrichtung der jeweiligen Leuchtenkammer verlaufenden Führungsschlitz für die Lampenträger aufweisen. Die Montage der Lampenträger ist einfach und schnell durchführbar, wenn die Lampenträger aus einem plattenförmigen rechteckförmigen Blech bestehen, in ihrer Hauptausdehnung in Lichtaustrittsrichtung der jeweiligen Leuchtenkammer verlaufen und selbstrastend und/oder selbstklemmend in den Führungsschlitzen der Halterungen festgesetzt sind. Hierbei ist es weiterhin zweckmäßig, wenn die Lampenträger an sich abgewandeten Seitenrändern mindestens eine herausgedrückte Klemmwarze und/oder mindestens einen aus den Seitenrändern freigeschnittenen und herausgebogenen Klemmzahn aufweisen. Ein solcher Lampenträger ist einfach gestaltet und sehr sicher in den Führungsschlitzen festsetzbar. Der Lampenträger ist leicht und schnell mit elektrischen Leitungen verbindbar, wenn aus den Lampenträgern ein Flachsteckeranschluß freigeschnitten ist und/oder die Lampenträger einen nach außen geöffneten Schlitz aufweisen, welcher als Schneid-Klemm-Vorrichtung für elektrische Kabel dient, wobei die langen Seitenkanten die Schnittkanten für die Mantelhülle des Kabels sind und zur klemmenden Halterung des Kabels dienen. Mittels der Schneid-Klemm-Vorrichtung kann beim Einsetzen der Lampenträger in die Leuchtenkammern die selbsttätige elektrische Kontaktierung zu den Kabeln selbsttätig hergestellt werden.

Die ersten Einbuchtungen für die Haltenocken der ersten Lampe sind einfach gestaltet, wenn sie im Bereich des an die Lampenträger angebundenen Endabschnitts der Haltelappen von der Innenseite einer eingedrückten Mulde und/oder eines Loches gebildet sind. Hierbei ist es besonders vorteilhaft, wenn die zweite Einbuchtung von einer in einen Seitenrand eines Haltelappens eingebrachten Freimachung gebildet ist, welche sich zu dem an dem Lampenträger angebundenen Endabschnitt und dem Rand der Öffnung hin erstreckt, wobei eine in den Rand der Öffnung eingedrückte Mulde an die Freimachung des einen Haltelappen angrenzt, während in den anderen Haltelappen ein Loch eingebracht ist.

Bei einer besonders vorteilhaften Weiterbildung der Erfindung weist ein Haltelappen der Lampenträger eine Freimachung mit zwei seitlich nebeneinander liegenden zweiten Einbuchtungen auf, in welche jeweils ein Haltenocken von unterschiedlichen zweiten Lampen eingreift, welche beide mit dem anderen Haltenocken in eine der ersten Einbuchtungen eingreifen. Dadurch können in den Lampenträger sowohl erste Lampen als auch zwei unterschiedlich gestaltete zweite Lampen eingesetzt werden. In einer Leuchtenkammer kann entweder nur die erste oder zweite Lampe in den Lampenträger eingesetzt werden, wenn zumindest eine Aussparung des Lampenträgers, welche zwischen den Haltelappen in den Randbereich der Öffnung des Lampenträgers eingebracht ist und zum Hindurchführen von einem Haltenocken der ersten bzw. zweiten Lampe dient, durch einen Vorsprung des Leuchtengehäuses verschlossen ist. Dadurch kann in jede Leuchtenkammer nur die für sie vorgesehene Leuchte in den Lampenträger eingesetzt werden.

In der Zeichnung sind mehrere Ausführungsbeispiele nach der Erfindung dargestellt, und zwar zeigen
- Figur 1: in einer Vorderansicht eine Heckleuchte für Fahrzeuge mit mehreren Leuchtenkammern ohne eine die Leuchtenkammern abschließende lichtdurchlässige Abschlußscheibe;
- Figur 2: einen Schnitt nach der Linie A-A in Figur 1 durch eine Leuchtenkammer mit einer zwei Glühwendel aufweisenden zweiten Lampe;
- Figur 3: einen Schnitt nach der Linie B-B in Figur 1 durch eine Leuchtenkammer mit einer eine einzige Glühwendel aufweisenden ersten Lampe;
- Figur 4: eine Vorderansicht auf eine erste Ausführungsform eines Lampenträgers, welcher in die Leuchtenkammern der Heckleuchte eingesetzt ist;
- Figur 5: einen Schnitt nach der Linie C-C in Figur 4;
- Figur 6: einen Schnitt nach der Linie D-D in Figur 4;
- Figur 7: eine Ansicht aus Richtung X in Figur 4 , während
- Figur 8: eine zweite Ausführungsform des Lampenträgers und
- Figur 9: eine dritte Ausführungsform des Lampenträgers darstellen.

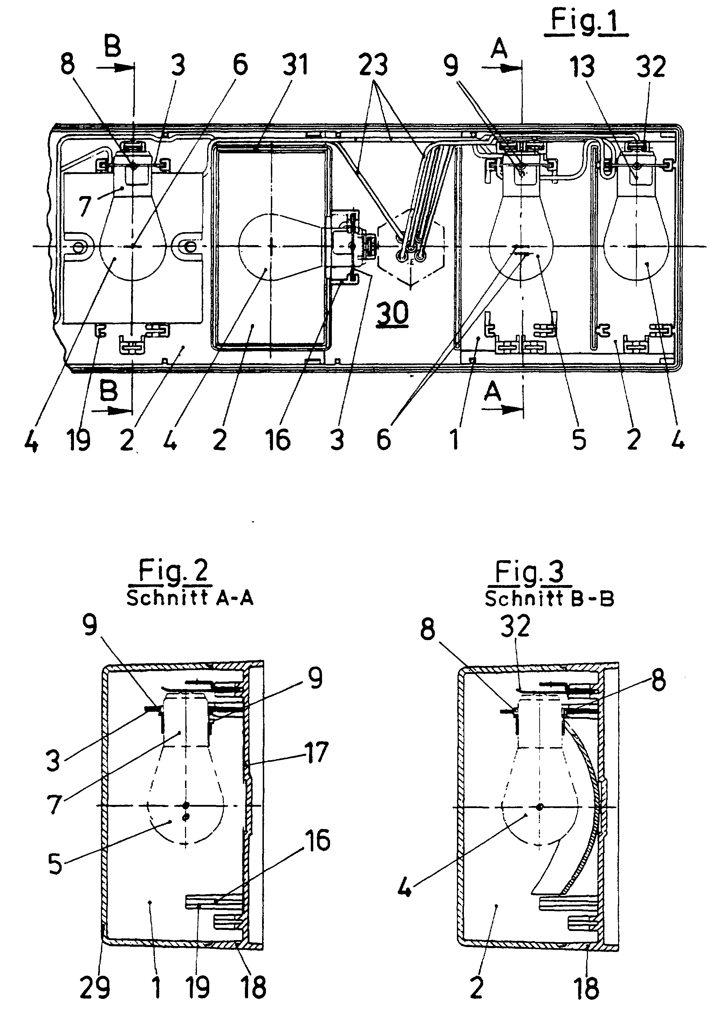

Die Heckleuchte für Fahrzeuge ist rechteckförmig ausgeführt und weist in Anbaulage mehrere seitlich nebeneinanderliegende Leuchtenkammern (1 bzw. 2) auf. Die Leuchtenkammern (1 bzw. 2) liegen seitlich nebeneinander und sind durch ein Leuchtengehäuse (18) und eine das Leuchtengehäuse (18) abschließende lichtdurchlässige Abschlußscheibe (29) gebildet. In Figur 1 sind drei Leuchtenkammern (2) mit einer ersten Lampe (4) und eine Leuchtenkammer (1) mit einer zweiten Lampe (5) dargestellt. Die ersten Lampen (4) weisen eine einzige Glühwendel (6) und die zweite Lampe (5) zwei Glühwendel (6) auf. Die drei Leuchtenkammern (2) mit den ersten Lampen (4) dienen als Blinkleuchte, Zusatzrückfahrleuchte bzw. Nebelschlußleuchte und die Leuchtenkammer (1) mit der zweiten Lampe (5) als Schluß- und Bremsleuchte. In jede der Leuchtenkammern (1 und 2) ist ein Lampenträger (3) eingesetzt. Sämtliche Lampenträger (3) der Heckleuchte sind mit demselben Werkzeug hergestellt. Die erste und zweite Lampe (4 und 5) sind in eine Öffnung (12) des Lampenträgers (3) eingesetzt. Die Glühwendel (6) der Lampen (4 und 5) verlaufen quer zu ihrer Längsachse und die Längsachse und die Glühwendel (6) verlaufen quer zur Lichtaustrittsrichtung der jeweiligen Leuchtenkammer (1 bzw. 2). Der Lampenträger (3) ist aus Blech hergestellt und rechteckförmig ausgeführt. An den langen Seitenrändern des rechteckförmigen Lampenträgers (3) sind jeweils zwei herausgedrückte Klemmwarzen (20) und ein zwischen ihnen freigeschnittener und aus dem Lampenträger herausgebogener Klemmzahn (21) angeordnet. Die Leuchtenkammern (1 und 2) sind mit in ihrem Aufbau identischen Halterungen (16) für den Lampenträger (3) versehen. Als Halterungen (16) dienen an die Innenseite des Bodens (17) des Leuchtengehäuses (18) angeformte Ansätze mit sich zugewandten Führungsschlitzen (19). In die Führungsschlitze (19) ist der plattenförmige, rechteckförmige Lampenträger (3) hochkant eingeschoben. Durch die Klemmwarzen (20) und die Klemmzähne (21) ist der Lampenträger (3) in den Führungsschlitzen (19) sicher festgesetzt. Der Lampenträger (3) weist an dem dem Boden (17) des Leuchtengehäuses (18) benachbarten Seitenrand einen Flachsteckeranschluß (22) und einen Schlitz (24) auf. Der Flachsteckeranschluß (22) ist aus dem Lampenträger (3) freigeschnitten und aus ihm herausgebogen, während der Schlitz (24) aus dem Lampenträger (3) ausgestanzt ist. Der Lampenträger (3) kann über den Flachsteckeranschluß (22) oder den Schlitz (24) mit einer elektrischen Leitung verbunden werden. In Figur 1 dienen als elektrische Leitungen Kabel (23), welche sich beim Einschieben des Lampenträgers (3) in die Führungsschlitze (19) selbsttätig in dem Schlitz (24) festklemmen. Hierbei dient der Schlitz (24) als Schneid-Klemm-Vorrichtung, da die Seitenkanten des Schlitzes (24) eine elastische Mantelhülle des Kabels (23) durchschneiden und die Seele des Kabels (23) zwischen sich festklemmen. Die Kabel (23) verlaufen von den einzelnen Leuchtenkammern (1 und 2) zu einem Raum (30) zwischen zwei Leuchtenkammern (1 und 2). In dem Raum (30) sind die Kabel (23) durch den Boden (17) des Leuchtengehäuses (18) nach außen geführt. Die an den Raum (30) angrenzende Leuchtenkammer (2) dient als Zusatzrückfahrlicht und ist gegenüber den anderen Leuchtenkammern soweit abgedichtet, daß die Leuchtenkammer (2) nicht durch das Licht der benachbarten Leuchtenkammern störend erhellt wird. Deshalb ist für die Leuchtenkammer (2) ist der Lampenträger (3) zum benachbarten Raum (30) hin angeordnet und die Leuchtenkammer (2) bis auf den Lampenträger (3) durch eine umlaufende Seitenwand (31) begrenzt. Bei den anderen Leuchtenkammern (1 und 2) sind die Lampenträger (3) und deren Halterungen (16) in der oberen Hälfte der Leuchtenkammern (1 und 2) angeordnet, wobei die Lampen (4 bzw. 5) mit ihrem Glaskolben nach unten weisen. Die Leuchtenkammern (1 und 2) weisen in ihrer unteren Hälfte ebenfalls eine Halterung (16) für die Lampenträger (3) auf. Somit kann die Heckleuchte je nachdem ob die Lampenträger (3) in die oben oder unten angeordneten Halterungen (16) eingesetzt werden, auf der linken bzw. rechten Fahrzeugseite montiert werden.

Die erste und zweite Lampe (4 und 5) weisen auf sich abgewandten Seiten ihres zylindrischen Sockels (7) jeweils einen abstehenden Haltenocken (8 bzw. 9) auf. Bei der ersten Lampe (4) geht durch die beiden Haltenocken (8) eine senkrecht durch die Längsachse der Lampe (4) gehende und senkrecht zur Glühwendel (6) verlaufende Linie. Bei der in Figur 1 und 2 dargestellten zweiten Lampe (5), welche zwei Glühwendel (6) aufweist, geht durch beide Haltenocken (9) eine senkrecht durch die Längsachse der Lampe (5) gehende und senkrecht zu den Glühwendeln (6) verlaufende Linie, wobei die beiden Linien voneinander beabstandet sind.

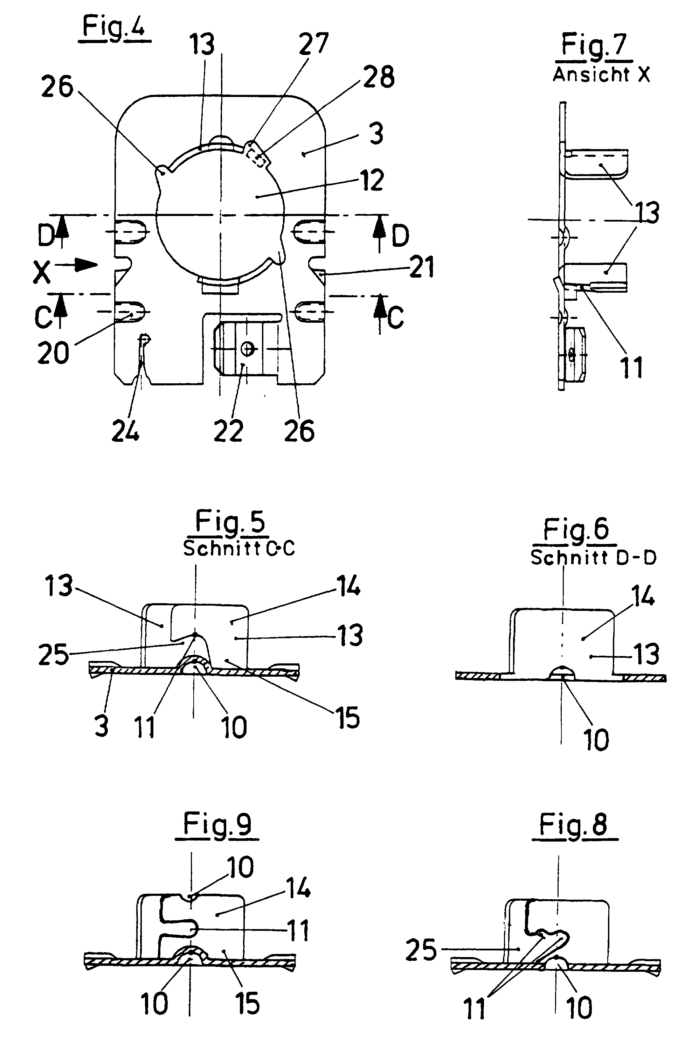

Der in den Figuren 4, 5, 6 und 7 dargestellte Lampenträger (3) weist aus seiner Öffnung (12) herausgebogene Haltelappen (13) auf, welche mit ihrer Innenseite an der Mantelfläche des zylindrischen Sockels (7) der Lampe (4 bzw. 5) anliegen. In einen Haltelappen (13) ist eine Freimachung (25) mit einer Einbuchtung (11) über den Haltenocken (9) der zweiten Lampe (5) angebracht, welcher den Glühfäden (6) näher liegt. Für den anderen Haltenocken (9) der zweiten Lampe (5) und die Haltenocken (8) der ersten Lampe (4) ist im Bereich der an den Lampenträger (3) angebundenen Endabschnitte (15) jeweils eine erste Einbuchtung (10) eingebracht. Eine der ersten Einbuchtungen (10) ist eine in den Randbereich der Öffnung (12) eingedrückte Mulde, welche an die Freimachung (25) angrenzt, während die andere erste Einbuchtung (10) durch ein zwischen Endabschnitt (15) und Lampenträger (3) eingebrachtes Loch gebildet ist. In den Rand der kreisförmigen Öffnung (12) sind diametral sich gegenüberliegende Aussparungen (26) und eine Aussparung (27) eingebracht. Die Aussparungen (26) dienen zum Hindurchführen der Haltenocken (8) der ersten Lampe (4), während die Aussparung (27) zum Hindurchführen eines der beiden Haltenocken (9) der zweiten Lampe (5) dient. Die Lampen (4 und 5) sind von der Seite in den Lampenträger (3) eingesetzt, an welcher die Haltelappen (13) angeordnet sind. Nach einem Hindurchführen der Haltenocken (8) der ersten Lampe (4) durch die Aussparungen (26) und einem Drehen der Lampe im Uhrzeigersinn, greifen die Haltenocken (8) in die ersten Einbuchtungen (10) des Lampenträgers (3) ein. Beim Einsetzen der zweiten Lampe (5) in den Lampenträger (3) wird einer der beiden Haltenocken (9) durch die Aussparung (27) hindurchgeführt und nach einem Drehen der zweiten Lampen (5) entgegen dem Uhrzeigersinn greift einer der beiden Haltenocken (9) in eine der beiden ersten Einbuchtungen (10) und der andere Haltenocken (9) in die zweite Einbuchtung (11) des Haltelappens (13) ein. An der ersten Lampe (4) liegt eine elektrische Kontaktfeder (32) an einem elektrischen Pol an der Deckfläche des zylindrischen Sockels (7) der ersten Lampe (4) unter Vorspannung an und drückt die beiden Haltenocken (8) in die ersten Einbuchtungen (10) hinein. Bei der zweiten Lampe (5) liegen an zwei elektrischen Polen an der Deckfläche des zylindrischen Sockels (7) jeweils eine der elektrischen Kontaktfedern (32) unter Vorspannung an und drückt den einen Haltenocken (9) gegen eine der beiden ersten Einbuchtungen (10) und den anderen gegen die zweite Einbuchtung (11).

In Figur 4 ist ein Vorsprung (28) gestrichelt dargestellt. Der Vorsprung (28) ist in den Leuchtenkammern (2) an das Gehäuse (18) angeformt und verschließt in diesen die Aussparung (27) der Lampenträger (3). Dadurch kann in den Leuchtenkammern (2) die zweite Lampe (5) nicht versehentlich in den Lampenträger (3) eingesetzt werden. In der Leuchtenkammer (1) ist zumindest eine der beiden Aussparungen (26) durch einen Vorsprung (28) verschlossen.

In Figur 8 ist eine zweite Ausführungsform des Lampenträgers (3) dargestellt. In den Lampenträger (3) ist nicht nur die erste Lampe (4), sondern auch zwei unterschiedliche zweite Lampen (5) einsetzbar. In den Lampenträger (3) ist die vorstehend beschriebene zweite Lampe (5) und eine Lampe (5) einsetzbar, bei der der eine Haltenocken (9) in eine der ersten Einbuchtungen (10) eingreift und der zweite Haltenocken (9) in eine von zwei zweiten Einbuchtungen (11), welche seitlich nebeneinanderliegend von einer Freimachung (25) in einem der beiden Haltelappen (13) gebildet ist.

Bei einer dritten Ausführungsform des Lampenträgers (3) ist eine erste und zweite Lampe (4 und 5) sowohl von der einen als auch von der anderen Seite her in den Lampenträger (3) einsetzbar, da dieser sowohl im Bereich des an den Lampenträger (3) angebundenen Endabschnitts (15) und des freien Endabschnitts (14) eine erste Einbuchtung (10) als auch in einem der Haltelappen (13) eine Freimachung (25) mit sich zugewandten Einbuchtungen (11) aufweist.

Bezugszeichenliste
- 1,2: Leuchtenkammer
- 3: Lampenträger
- 4: erste Lampe
- 5: zweite Lampe
- 6: Glühwendel
- 7: Sockel
- 8, 9: Haltenocken
- 10: erste Einbuchtung
- 11: zweite Einbuchtung
- 12: Öffnung
- 13: Haltelappen
- 14: freier Endabschnitt
- 15: angebundener Endabschnitt
- 16: Halterung
- 17: Boden
- 18: Leuchtengehäuse
- 19: Führungsschlitz
- 20: Klemmwarze
- 21: Klemmzahn
- 22: Flachsteckeranschluß
- 23: elektrisches Kabel
- 24: Schlitz
- 25: Freimachung
- 26, 27: Aussparung
- 28: Vorsprung
- 29: Abschlußscheibe
- 30: Raum
- 31: Seitenwand
- 32: elektrische Kontaktfeder

## Patentansprüche

1. Heckleuchte für Fahrzeuge mit mindestens zwei Leuchtenkammern (1 und 2), in welche jeweils ein Lampenträger (3) für eine erste bzw. zweite Lampe (4 und 5) eingesetzt ist, welche mindestens eine quer zur Lichtaustrittsrichtung der jeweiligen Leuchtenkammer (1 bzw. 2) verlaufende Glühwendel (6) und Längsachse aufweisen, und bei der von der Mantelfläche eines Sockels (7) zwei Haltenocken (8 bzw. 9) abstehen, welche bei beiden Lampen (4 und 5) auf sich abgewandten Seiten des Sockels (7) liegen, wobei bei der ersten Lampe (4) durch beide Haltenocken (8) eine senkrecht zur Glühwendel (6) verlaufende Linie geht und bei der zweiten Lampe (5) durch zumindest den einen Haltenocken (9) eine senkrecht zur Glühwendel (6) verlaufende Linie geht und der andere Haltenocken (9) zu der Linie beabstandet ist, und welche in eine erste bzw. zweite Einbuchtung (10 bzw. 11) des jeweiligen Lampenträgers (3) eingreifen, welcher mit aus einer Öffnung (12) herausgestellten Haltelappen (13) an die Mantelfläche des Sockels (7) angrenzt, **dadurch gekennzeichnet, daß** die Lampenträger (3) für die erste und zweite Lampe (4 und 5) in ihrem Aufbau identisch sind und an dem freien und/oder im Bereich des an den Lampenträger (3) angebundenen Endabschnitts (14 bzw. 15) der Haltelappen (13) eine nach außen geöffnete erste Einbuchtung (10) für die beiden Haltenocken (8) der ersten Lampe (4) aufweisen, während der eine Haltenocken (9) der zweiten Lampe (5) in eine der ersten Einbuchtungen (10) und der andere Haltenocken (9) in eine zweite Einbuchtung (11) eingreift, die ein Haltelappen (13) zwischen seinen Endabschnitten (14 und 15) aufweist.

2. Heckleuchte nach Anspruch 1, **dadurch gekennzeichnet, daß** die zur Aufnahme der ersten und zweiten Lampe (4 und 5) dienenden Lampenträger (3) in Halterungen (16) der Leuchte eingesetzt sind, welche in ihrem Aufbau identisch ausgeführt sind.

3. Heckleuchte nach Anspruch 2, **dadurch gekennzeichnet, daß** in mehreren Leuchtenkammern (1 und 2) für die erste bzw. zweite Lampe (4 bzw.5) in Anbaulage der Leuchte eine Halterung (16) sowohl in der oberen als auch in der unteren Hälfte der Leuchtenkammern (1 und 2) angeordnet ist.

4. Heckleuchte nach Anspruch 2 oder 3, **dadurch gekennzeichnet, daß** die Halterungen (16) von an dem Boden (17) eines Leuchtengehäuses (18) angeformten Ansätzen gebildet sind, die an sich zugewandten Seiten jeweils einen in Lichtaustrittsrichtung der jeweiligen Leuchtenkammer (1 bzw. 2) verlaufenden Führungschlitz (19) für die Lampenträger (3) aufweisen.

5. Heckleuchte nach einem der Ansprüche 2 bis 4, **dadurch gekennzeichnet, daß** die Lampenträger (3) aus einem plattenförmigen, rechteckförmigen Blech bestehen, in ihrer Hauptausdehnung in Lichtaustrittsrichtung der jeweiligen Leuchtenkammer (1 und 2) verlaufen und selbstrastend und/oder selbstklemmend in den Halterungen (16) festgesetzt sind.

6. Heckleuchte nach Anspruch 5, **dadurch gekennzeichnet, daß** die Lampenträger (3) an sich abgewandten Seitenrändern, mindestens eine herausgedrückte Klemmwarze (20) und/oder mindestens einen aus den Seitenrändern freigeschnittenen und herausgebogenen Klemmzahn (21) aufweist.

7. Heckleuchte nach einem der Ansprüche 1 bis 6, **dadurch gekennzeichnet, daß** die erste Einbuchtung (10) im Bereich des an die Lampenträger (3) angebundenen Endabschnitts (15) der Haltelappen (13) von der Innenseite einer eingedrückten Mulde und/oder eines Loches gebildet sind.

8. Heckleuchte nach Anspruch 7, **dadurch gekennzeichnet, daß** die zweite Einbuchtung (11) von einer in einen Seitenrand eines Haltelappens (13) eingebrachten Freimachung (25) gebildet ist, welche sich zu dem an den Lampenträger (3) angebundenen Endabschnitt (15) und dem Rand der Öffnung (12) hin erstreckt, wobei eine in den Rand der Öffnung (12) eingedrückte Mulde an die Freimachung (25) des Haltelappens (13) angrenzt, während in den anderen Haltelappen (13) ein Loch eingebracht ist.

9. Heckleuchte nach einem der Ansprüche 1 bis 8, **dadurch gekennzeichnet, daß** einer der beiden Haltelappen (13) der Lampenträger (3) eine Freimachung (25) mit zwei seitlich nebeneinanderliegenden ersten Einbuchtungen (11) aufweist, in welche jeweils ein Haltenocken (9) von unterschiedlichen zweiten Lampen (5) eingreift, welche beide mit dem anderen Haltenocken (9) in eine der ersten Einbuchtungen (10) eingreifen.

10. Heckleuchte nach einem der Ansprüche 1 bis 9, **dadurch gekennzeichnet, daß** in den Leuchtenkammern (1 und 2) zumindest eine Aussparung (26 bzw. 27) der Lampenträger (3), welche zwischen den Haltelappen (13) in den Randbereich der Öffnung (12) des Lampenträgers (3) eingebracht ist und zum Hindurchführen von einem Haltenocken (8 bzw. 9) der ersten bzw. zweiten Lampe (4 bzw. 5) dient, durch einen Vorsprung (28) des Leuchtengehäuses (18) für einen Haltenocken (8 bzw. 9) der ersten bzw. zweiten Lampe (4 bzw. 5) versperrt ist.

## Claims

1. Rear light for motor vehicles, said rear light having at least two lamp chambers (1 and 2), into each of which there is inserted a bulb holder (3) for a first or second bulb (4 and 5), said bulbs having at least one spiral-wound filament (6) and a longitudinal axis running at right angles to the direction of the light emerging from each lamp chamber (1 or 2), and two holding cams (8 or 9) which project from the outer surface of a cap (7), said holding cams on each bulb (4 and 5) being located on the sides of the cap (7) facing away from one another, in which case with the first bulb (4) a line running perpendicular to the spiral-wound filament (6) passes through the two holding cams (8) and with the second bulb (5) a line running perpendicular to the spiral-wound filament (6) passes through at least one holding cam (9) and the other holding cam (9) is at a distance from the line, and said holding cams engaging in a first or a second recess (10 or 11) of the respective bulb holder (3) which, with holding lugs (13) provided on the outside of an opening (12), lies adjacent to the outer surface of the cap (7), **characterized in that** the bulb holders (3) for the first and second bulbs (4 and 5) are identical in structure and, on the free end portion (14) of the holding lugs (13) and/or in the region of the end portion (15) which is attached to the bulb holder (3), have a first outward-opening recess (10) for the two holding cams (8) of the first bulb (4), whilst one holding cam (9) of the second bulb (5) engages in one of the first recesses (10) and the other holding cam (9) engages in a second recess (11), which a holding lug (13) has between its end portions (14 and 15).

2. Rear light according to Claim 1, **characterized in that** the bulb holders (3) serving to hold the first and second bulbs (4 and 5) are inserted into holders (16) of the light, which are structurally identical.

3. Rear light according to Claim 2, **characterized in that**, in a plurality of lamp chambers (1 and 2) for the first or second bulb (4 or 5 respectively), a holder (16) is disposed both in the upper and in the lower half of the lamp chambers (1 and 2) when viewed in fitted position of the light.

4. Rear light according to Claim 2 or 3, **characterized in that** the holders (16) consist of projections formed on the back (17) of a lamp housing (18), each of these projections having, on sides which face one another, a guide slot (19) for the bulb holder (3), said guide slot running in direction of the light emerging from the respective lamp chamber ( 1 or 2).

5. Rear light according to one of Claims 2 to 4, **characterized in that** the bulb holders (3) consist of rectangular sheet metal, are aligned in their main extension in direction of the light emerging from the respective lamp chambers (1 and 2) and are fixed in the holders (16) so as to be self-engaging and/or self-clamping.

6. Rear light according to Claim 5, **characterized in that** the bulb holders (3), on side edges facing away from one another, have at least one pressed-out clamping projection (20) and/or at least one clamping prong (21), the latter being cut free from the side edges and bent out.

7. Rear light according to one of Claims I to 6, **characterized in that**, in the region of the end portion (15) of the holding lugs (13) attached to the bulb holder (3), the first recess (10) consists of the inside of a pressed-in cavity and/or aperture.

8. Rear light according to Claim 7, **characterized in that** the second recess (11) is formed by an opening (25) made in a side edge of a holding lug (13), which opening (25) extends towards the end portion (15) attached to the bulb holder (3) and towards the edge of the opening (12), a cavity pressed into the edge of the opening (12) lying adjacent to the opening (25) of the holding lug (13), whilst an aperture is provided in the other holding lug (13).

9. Rear light according to one of Claims 1 to 8, **characterized in that** one of the two holding lugs (13) of the bulb holders (3) has an opening (25) with two adjacent first recesses (11), in one of which one holding cam (9) of different second bulbs (5) engages, both engaging with the other holding cam (9) in one of the first recesses (10).

10. Rear light according to one of Claims 1 to 9, **characterized in that** in the lamp chambers (1 and 2) at least one recess (26 or 27) in the bulb holders (3), made between the holding lugs (13) in the peripheral area of the opening (12) of the bulb holder (3) and serving for the passage of a holding cam (8 or 9) of the first or second bulb (4 or 5), is blocked by means of a projection (28) of the lamp housing (18) in respect of a holding cam (8 or 9) of the first or second bulb (4 or 5).

## Revendications

1. Feu arrière pour véhicules, comportant deux logements (1 et 2) pour lampes, dans lesquels est inséré respectivement un support de lampe (3) pour les première et seconde lampes (4 et 5), qui possèdent au moins un filament incandescent (6) qui s'étend transversalement à la direction de sortie de la lumière des logements respectifs (1 ou 2) pour les feux et possèdent un axe longitudinal, et dans lequel à partir de la surface enveloppe d'un culot (7) font saillie deux ergots de retenue (8, 9), qui, dans les deux lampes (4 et 5), sont situés sur des côtés opposés du culot (7), et dans lequel dans le cas de la première lampe (4), une droite perpendiculaire au filament électrique (6) passe par les deux ergots de retenue (8) et, dans le cas de la seconde lampe (5), une droite perpendiculaire au filament hélicoïdal (6) passe par au moins l'un des ergots de retenue (9) et l'autre ergot de retenue (9) est distant de cette droite, lesquels ergots de retenue s'engagent dans des premier et second renfoncements (10 et 11) du support de lampe respectif (3) qui, par des pattes de retenue (13) ressorties hors d'une ouverture (12), jouxte la surface enveloppe du culot (7), **caractérisé en ce que** les supports de lampe (3) pour les première et seconde lampes (4 et 5) ont des agencements identiques et possèdent un premier renfoncement (10), qui est ouvert en direction de l'extérieur, pour les deux ergots de retenue (8) de la première lampe (4), dans la zone de la section d'extrémité (14, 15) des pattes de retenue (13), qui est fixée au support de lampe (3), alors que le premier ergot de retenue (9) de la deuxième lampe (5) s'engage dans l'un des premiers renfoncements (10) et que l'autre ergot de retenue (9) s'engage dans un second renfoncement (11), qui possède une patte de retenue (13) située entre ses sections d'extrémité (14 et 15).

2. Feu arrière selon la revendication 1, **caractérisé en ce que** les supports de lampe (3), qui servent à recevoir les première et seconde lampes (4 et 5), sont insérés dans des dispositifs de retenue (16) des lampes, qui sont réalisés avec des agencements identiques.

3. Feu arrière selon la revendication 2, **caractérisé en ce que** le dispositif de retenue (16) est disposé aussi bien dans la moitié supérieure que dans la moitié inférieure de plusieurs logements (1 et 2) pour les première et seconde lampes (4 et 5), lorsque les lampes sont en position installée.

4. Feu arrière selon la revendication 2 ou 3, **caractérisé en ce que** les dispositifs de retenue (16) sont formés par des appendices saillants, qui sont formés sur le fond (17) d'un boîtier de lampe (18) et qui possèdent, sur des côtés se faisant face, respectivement une fente de guidage (19) qui est prévue pour le support de lampe (3) et s'étend dans la direction de sortie de la lumière du logement respectife (1 ou 2) pour lampe.

5. Feu arrière selon l'une des revendications 2 à 4, **caractérisé en ce que** les supports de lampe (3) sont formés d'une tôle rectangulaire en forme de plaque, dont la dimension principale s'étend dans la direction de sortie de la lumière du logement respectif pour lampe (1 et 2) et qui sont fixés fermement par encliquetage automatique et/ou blocage automatique dans les dispositifs de retenue (16).

6. Feu arrière selon la revendication 5, **caractérisé en ce que** les supports de lampe (3) possèdent des bords latéraux situés à l'opposé l'un de l'autre, au moins un bouton de serrage ressorti (20) et/ou au moins une dent de serrage (21) qui est découpée dans les bords latéraux et est repliée vers l'extérieur.

7. Feu arrière selon l'une des revendications 1 à 6, **caractérisé en ce que** le premier renfoncement (10) est formé dans la zone de la partie d'extrémité (15), qui est fixée aux supports de lampe (3), des pattes de retenue, par le côté intérieur d'une auge en renfoncement et/ou d'un trou.

8. Feu arrière selon la revendication 7, **caractérisé en ce que** le second renfoncement (20) est formé par un dégagement (25) formé par fraisage dans une paroi latérale de la patte de retenue (13) et qui s'étend en direction de la partie d'extrémité (15), fixée au support de lampe (3), et en direction du bord de l'ouverture (12), une auge, formée en renfoncement dans le bord de l'ouverture (12), jouxtant le dégagement (25) de la patte de retenue (13), tandis qu'un trou est aménagé dans les autres pattes de retenue (13).

9. Feu arrière selon l'une des revendications 1 à 8, **caractérisé en ce que** l'une des deux pattes de retenue (13) des supports de lampe (3) comporte un dégagement (25) possédant deux premiers renfoncements (11), qui sont contigus latéralement et dans lesquels s'engage respectivement un ergot de retenue (9) de secondes lampes différentes (5), qui s'engagent toutes deux avec l'autre ergot de retenue (9) dans l'un des premiers renfoncements (10).

10. Feu arrière selon l'une des revendications 1 à 9, **caractérisé en ce que** dans les logements (1 et 2) pour les lampes au moins un évidement (26 ou 27) des supports de lampe (3), qui est inséré entre les pattes de retenue (13) dans la zone marginale de l'ouverture (12) du support de lampe (3) est utilisé pour le passage d'un ergot de retenue (8 ou 9) de la première ou de la seconde lampe (4 ou 5), est bloqué par une partie saillante (28) du boîtier de lampe (18) pour un ergot de retenue (8 ou 9) de la première ou de la seconde lampe (4 ou 5).
